# EUROPEAN PATENT SPECIFICATION

(11) **EP 1 800 920 B1**
(45) Date of publication and mention of the grant of the patent: **05.11.2008**
(21) Application number: 06126594.8
(22) Date of filing: 20.12.2006
(51) Int. Cl.: B60H 3/06

(54) **Air-conditioning system for a vehicle**
Klimaanlagensystem für ein Fahrzeug
Système de climatisation pour véhicule

(30) Priority: 26.12.2005 JP 2005372084
(43) Date of publication of application: 27.06.2007
(73) Proprietor: Sanden Corporation, Isesaki-shi, Gunma 372-8502 (JP)
(72) Inventor: Takahashi, Shinya, Isesaki-shi Gunma 372-8502 (JP); Isobe, Toshimi, Isesaki-shi Gunma 372-8502 (JP); Kawasaki, Masatoshi, Isesaki-shi Gunma 372-8502 (JP)
(74) Representative: Haley, Stephen

(56) References cited:
- EP-A2- 1 102 013
- WO-A-03/051489
- DE-C1- 10 036 502
- FR-A1- 2 802 620
- JP-A- 61 259 043

## Description

The present invention relates to air-conditioning systems for vehicles.

An air-conditioning system for a vehicle includes an air-conditioning unit which is arranged inside an instrument panel located at the front of the passenger compartment. The air-conditioning unit has a housing in which is defined part of an air flow path for guiding the conditioned air into the passenger compartment.

More specifically, the air-conditioning unit housing contains a blower for producing a flow of air flowing from air inlets toward air outlets thereof, as well as an evaporator for cooling the air flow. Also, inside the housing, a filter is arranged upstream of the blower so as to remove dust and the like in the air flow.

Air ducts extend from the respective air outlets and have vents opening into the passenger compartment. The vents include, for example, a defroster vent opening toward the windshield, face vents opening toward the upper halves of occupants' bodies in the vehicle, and foot vents opening toward the feet of the occupants.

Doors are arranged near the respective air outlets to open and close the respective air ducts. Specifically, the doors are opened/closed in multiple ventilation modes, in accordance with which the conditioned air is let out through the specified vent or vents into the passenger compartment. A mode in which the air is let out only through the face vents is called face mode, a mode in which the air is let out only through the foot vents is called foot mode, and a mode in which the air is let out through the face and foot vents is called bi-level mode.

Also, the air-conditioning system is provided with detector means for detecting the amount of clogging of the filter. If the filter is significantly clogged, the occupant is notified of the need for replacement of the filter, thereby to prevent lowering in the air-conditioning capacity.

For example, the automotive air-conditioner disclosed in Japanese Patent No. 3588887 includes a pressure sensor located between the blower and the filter, as the detector means for detecting clogging of the filter. On the other hand, Unexamined Japanese Patent Publication No. S61-259043 discloses a control device for an air conditioner for indoor use, which is provided with a current detector for measuring the electric current supplied to the motor for driving the blower. With the techniques disclosed in these documents, the amount of clogging of the filter is presumably detectable on the basis of change in the pressure of the space between the blower and the filter or change in the current value supplied to the blower motor.

In the automotive air-conditioner disclosed in Japanese Patent No. 3588887, the amount of clogging of the filter is determined also when the ventilation mode is the face mode or the bi-level mode. In these ventilation modes, however, it is difficult to accurately detect the amount of clogging, for the reason stated below.

Generally, each face vent is fitted with a movable louver so that the occupant can freely change the direction and quantity (flow rate) of air. Like the amount of clogging of the filter that varies with time, the opening of the movable louver causes a change in the air-flow resistance of the air flow path. Accordingly, the opening of the movable louver is also a cause of change in the current supplied to the blower motor or in the pressure of the space between the filter and the blower, making it difficult to accurately detect the amount of clogging of the filter in the face mode and the bi-level mode.

DE10036502 discloses an air conditioning system for a vehicle, which compares a sewer signal with a reference signal to determine whether the degree of filter fouling exceeds a defined value.

An object of the present invention is to provide an automotive air-conditioning system capable of reliable detection of clogging of a filter.

To achieve the object, the present invention provides an air-conditioning system for a vehicle, comprising: an air-conditioning unit housing having an air inlet and a plurality of air outlets; a blower contained, together with an evaporator, in the air-conditioning unit housing, for producing a flow of air flowing from the air inlet toward the air outlets through the evaporator; a filter arranged between the air inlet and the blower, for cleaning the air flow; a plurality of air ducts extending from the air outlets, respectively, and having respective vents opening into a passenger compartment of the vehicle; a plurality of doors arranged near the air outlets, respectively, for opening and closing the respective air ducts; a movable louver fitted in the vent of at lease one of the air ducts; and a clogging detection device for detecting clogging of the filter only when the air duct having the vent fitted with the movable louver is closed by the door.

In the air-conditioning system of the present invention, the clogging detection device detects clogging of the filter only when the door for opening/closing the air duct provided with the movable louver is closed. Thus, during the clogging detection, the air-flow resistance of the air flow path does not change due to the opening of the movable louver, whereby clogging of the filter can be detected with reliability by the clogging detection device.

Preferably, the air-conditioning system includes, as the air ducts, a defroster duct having a vent opening toward a windshield of the vehicle, a foot duct having a foot vent opening toward feet of an occupant in the vehicle, and a face duct having a face vent opening toward an upper half of the occupant's body and fitted with the movable louver. The clogging detection device detects clogging of the filter only when the face duct is closed and at the same time at least one of the defroster duct and the foot duct is open.

The clogging detection device preferably measures at least one of a current value supplied to a motor for driving the blower, a pressure downstream of the filter, and a flow velocity of the air flow in the vicinity of the filter, to detect clogging of the filter on the basis of the measurement result.

In the preferred air-conditioning system, the clogging detection device measures at least one of the current value supplied to the blower motor, the pressure downstream of the filter, and the flow velocity of the air flow in the vicinity of the filter, and detects clogging of the filter on the basis of the measurement result. When the air duct provided with the movable louver is open, each of these measured values increases or decreases depending on the opening of the movable louver. Since the clogging detection device is adapted to detect clogging of the filter when the air duct with the movable louver is closed, the measured values do not vary depending on the opening of the movable louver, whereby clogging of the filter can be detected with reliability.

Preferably, the clogging detection device repeatedly performs the measurement and, if an amount of change of the measurement result from an initial value becomes greater than a predetermined value, judges that the filter is clogged.

In the preferred air-conditioning system, the clogging detection device repeatedly performs the measurement, and if the amount of change of the measurement result from the initial value, that is, the difference between the measurement result and the initial value, exceeds the predetermined value, it is judged that the filter is clogged. All of the repeated measurements are performed while the air duct provided with the movable louver is closed. Accordingly, all measured values are accurate, inclusive of the initial value, and thus clogging of the filter can be detected with reliable accuracy.

The present invention will become more fully understood from the detailed description given hereinafter and the accompanying drawings which are given by way of illustration only, and thus, are not limitative of the present invention, and wherein:
FIG. 1 schematically illustrates the construction of an automotive air-conditioning system according to a first embodiment ;
FIG. 2 schematically shows an instrument panel and its peripheral parts in a passenger compartment of a vehicle to which the air-conditioning system of FIG. 1 is applied;
FIG. 3 is a schematic block diagram of a control device used in the automotive air-conditioning system of FIG. 1;
FIG. 4 is a flowchart showing an interrupt routine executed by the control device of FIG. 3;
FIG. 5 is a graph showing air flow path characteristic curves, blower characteristic curve and operating current curve of the automotive air-conditioning system of FIG. 1; and
FIG. 6 is a graph showing pressure curves employed in an automotive air-conditioning system according to a second embodiment.

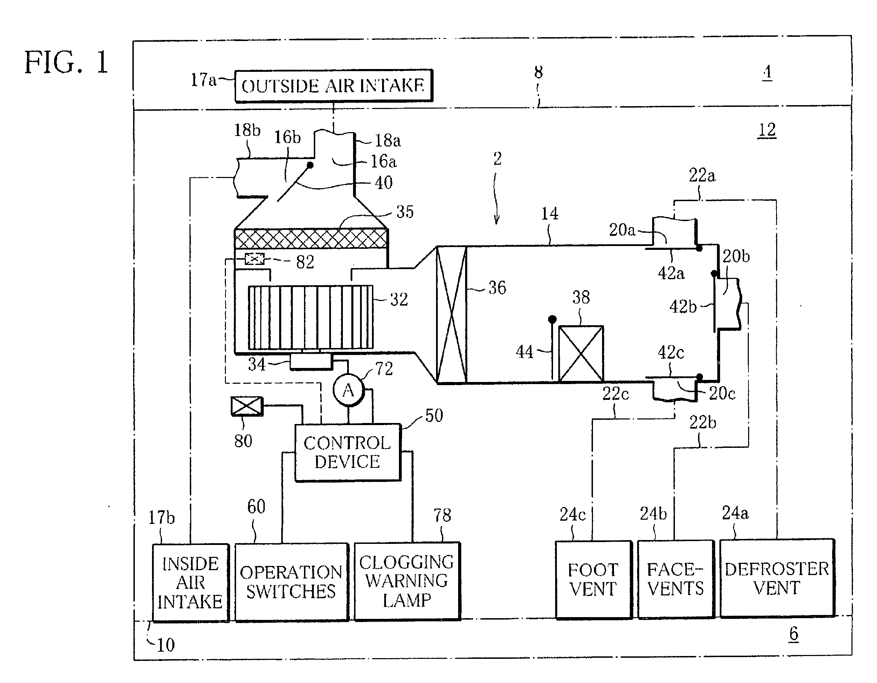

FIG. 1 schematically shows an air-conditioning system for a vehicle according to a first embodiment of the present invention. The air-conditioning system includes an air-conditioning unit 2.

Specifically, the vehicle has an engine compartment 4 and a passenger compartment 6 separated from each other by a partition wall 8, and a machinery compartment 12 is provided at the front of the passenger compartment 6 and between the partition wall 8 and an instrument panel 10. The air-conditioning unit 2 is placed in the machinery compartment 12.

The air-conditioning unit 2 has a housing 14, in which is defined part of an air flow path for guiding conditioned air into the passenger compartment 6.

More specifically, two air inlets, namely, an inlet 16a for introducing fresh air (outside air) and an inlet 16b for introducing recirculated air, open in one end portion of the housing 14. The air inlet 16a is connected with an outside air duct 18a having an outside air intake 17a opening into the outside of the vehicle, and the air inlet 16b is connected with an inside air duct 18b having an inside air intake 17b opening into the passenger compartment 6.

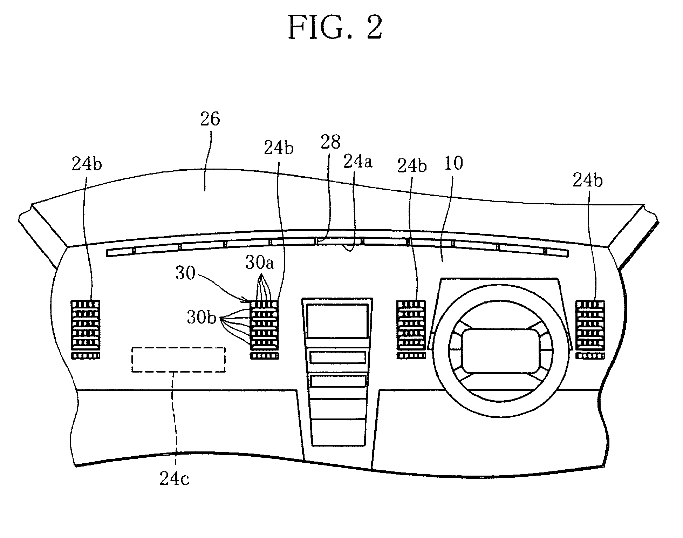

Three air outlets 20a, 20b and 20c open in the other end portion of the housing 14 and are connected with a defroster air duct 22a, a face air duct 22b and a foot air duct 22c, respectively, which have vents opening at different locations of the passenger compartment 6. As shown in FIG. 2, the defroster air duct 22a has a vent (defroster vent) 24a opening toward a windshield 26 of the vehicle. The face air duct 22b has four vents (four face vents) 24b opening toward the upper halves of occupants' bodies in the driver's and passenger's seats. The foot air duct 22c has a vent 24c opening toward the occupant's feet.

Among the vents 24, the defroster vent 24a is fitted with a fixed louver having fixed slats 28. On the other hand, each of the face vents 24b is fitted with a movable louver 30 having movable vertical slats 30a and movable horizontal slats 30b.

Referring again to FIG. 1, a blower 32 is arranged in the housing 14 and located close to the air inlets 16. The blower 32 is rotated by a blower motor 34 to produce a flow of air flowing from the air inlets 16 toward the air outlets 20.

A filter 35 is also arranged in the housing 14 and located between the air inlets 16 and the blower 32. The filter 35 has an area substantially equal to the cross-sectional area of a filter-receiving portion of the housing 14 where the filter 35 is fitted. Consequently, the air flow produced by the blower 32 passes through the filter 35 without fail, and at this time, dust and the like suspended in the air adhere to the filter 35, so that the air flow is cleaned. Namely, the filter 35 is a dust filter.

Also, an evaporator 36 is arranged in the housing 14 and is located downstream of the blower 32 as viewed in the direction of the air flow. The front surface of the evaporator 36, which is closer to the blower 32, has an area substantially equal to the cross-sectional area of an evaporator-receiving portion of the housing 14 where the evaporator 36 is fitted so that all of the air flow may pass through gaps (heat exchanging section) of the evaporator 36.

The evaporator 36 is inserted in a refrigerant circulation passage, not shown, which extends between the engine compartment 4 and the machinery compartment 12. A compressor, a condenser, a receiver and an expansion valve are also inserted in the refrigerant circulation passage. Motive power is transmitted from the engine of the vehicle to the compressor through an electromagnetic clutch, whereupon the compressor causes refrigerant to circulate through the refrigerant circulation passage, so that the refrigerant vaporizes in the evaporator 36. As air flows through the gaps of the evaporator 36 while the refrigerant is vaporizing, heat of vaporization is removed from the air and thus the air is cooled.

Further, a heater core 38 is arranged in the housing 14 and located downstream of the evaporator 36 as viewed in the direction of the air flow. The front surface of the heater core 38, which is closer to the evaporator 36, has an area smaller than the cross-sectional area of a portion of the housing 14 where the heater core 38 is arranged so that only part of the air flow may pass through gaps (heat exchanging section) of the heater core 38 after passing through the evaporator 36.

The heater core 38 is inserted, together with a hot water valve, in a bypass passage, not shown, which extends between the engine compartment 4 and the machinery compartment 12 for passing engine cooling water therethrough. The bypass passage is connected to a coolant circulation passage for circulating the engine cooling water around the engine and a radiator in such a manner that the heater core 38 and the radiator are connected in parallel with each other. When the hot water valve is opened while the engine cooling water is circulating through the coolant circulation passage, the cooling water (hot water) heated by the engine flows into the bypass passage, so that the heater core 38 is heated by the hot water. Thus, the air flow is heated as it passes through the gaps of the heated heater core 38.

Also, a plurality of dampers (doors) are arranged in the housing 14 so as to switch the air flow path, that is, to change the course of the air flow produced by the blower 32.

More specifically, an inside/outside air switching damper 40 is arranged near the air inlets 16 to open and close the air inlets 16, namely, the outside and inside air ducts 18a and 18b. In the vicinity of the air outlets 20, a defroster damper 42a, a face damper 42b and a foot damper 42c are arranged so as to open and close the respective air outlets 20, namely, the defroster air duct 22a, the face air duct 22b, and the foot air duct 22c, respectively. Also, a heater core damper 44 is arranged near the front surface of the heater core 38. The opening, or angular position, of the heater core damper 44 is varied to control the flow rate of air passing through the heater core 38.

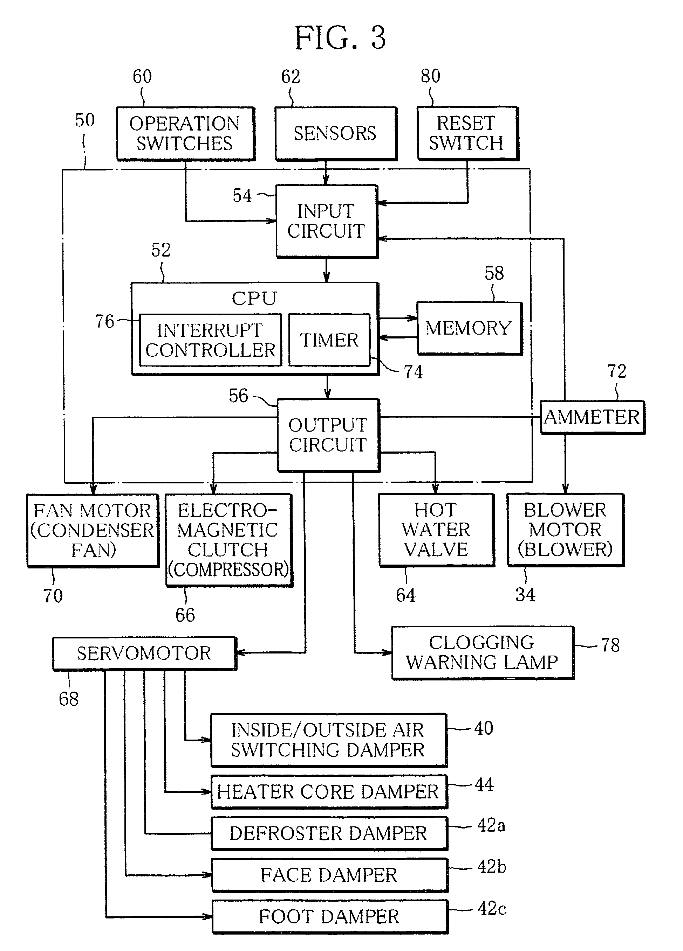

A control device 50 for the automotive air-conditioning system is also arranged in the machinery compartment 12 and comprises a microcomputer, for example. As shown in FIG. 3, the control device 50 includes a CPU (central processing unit) 52, an input circuit 54, an output circuit 56, and a memory 58. The input circuit 54 is connected with operation switches 60 facing the passenger compartment 6, and a sensor group 62. The sensor group 62 includes a sensor for detecting the temperature of the passenger compartment 6, a sensor for detecting the temperature of the outside air, a sensor for detecting the intensity of sunlight, a sensor for detecting the temperature of the air flow at a location downstream of the evaporator 36, and a sensor for detecting the temperature of the engine cooling water.

The output circuit 56 of the control device 50 is connected to the blower motor 34, the hot water valve 64, the electromagnetic clutch 66 mounted on the compressor, a servomotor 68, and a fan motor 70.

The automotive air-conditioning system further comprises clogging detector means (clogging detection device) for detecting clogging of the filter 35 with dust and the like. The clogging detector means includes an ammeter 72 as a clogging sensor. The ammeter 72 is inserted in a power feeder line connecting between the output circuit 56 of the control device 50 and the blower motor 34, and is capable of measuring the electric current (current value) supplied to the blower motor 34. The ammeter 72 has a signal output terminal connected to the input circuit 54, and thus, the current value measured by the ammeter 72 is input to the input circuit 54.

The clogging detector means also includes a timer 74 and an interrupt controller 76, both built in the CPU 52 of the control device 50. The timer 74 and the interrupt controller 76 cause the CPU 52 to periodically execute an interrupt routine for clogging detection, stored in the memory 58.

Further, the clogging detector means includes a clogging warning lamp 78 as output means for notifying the occupant of the clogging of the filter 35. The clogging warning lamp 78 is located on the instrument panel 10 so as to face the passenger compartment 6 and is switched on when it is judged by the interrupt routine that the filter 35 is clogged. Also, the clogging detector means includes a reset switch 80 arranged in the machinery compartment 12 and connected to the input circuit 54 of the control device 50. The reset switch 80 is turned on by, for example, a serviceperson immediately after the filter 35 is replaced with a new one.

In the automotive air-conditioning system described above, the control device 50 drives the blower motor 34, the hot water valve 64, the electromagnetic clutch 66 of the compressor, the servomotor 68 and the fan motor 70 as needed in accordance with the instructions input by the occupant through the operation switches 60, information acquired from the sensor group 62, and a main program and data stored in the memory 58, to control the air conditioning of the passenger compartment 6.

In the control device 50, on the other hand, the execution of the main program is periodically interrupted to execute the interrupt routine for detecting clogging of the filter 35.

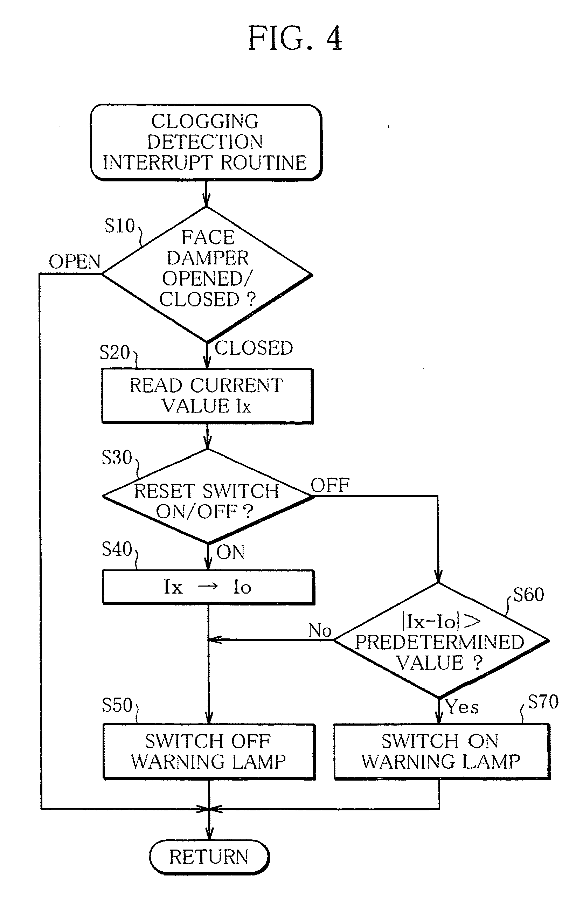

The interrupt routine will be described in detail with reference to FIG. 4. First, it is determined whether the face damper 42b is opened or closed (Step S10). If it is judged by the decision that the face damper 42b is open and thus that the face air duct 22b is open, the interrupt routine ends and the process is returned to the main program. If, on the other hand, the face damper 42b is in the closed position and thus the face air duct 22b is closed, a current value Ix then measured by the ammeter 72 is read into the CPU 52 via the input circuit 54 (Step S20).

After the current value Ix is read, it is determined whether the reset switch 80 has been turned on or not after the latest execution of the interrupt routine (Step S30). If the reset switch 80 has been turned on, the current value Ix is substituted for an initial value Io (Step S40). Then, the clogging warning lamp 78 is switched off (Step S50), whereupon the interrupt routine ends.

If it is judged in Step S30 that the reset switch 80 has been off, it is determined whether or not the amount of change of the current value Ix from the initial value Io, that is, the difference between the current value Ix and the initial value Io, is greater than a predetermined value (Step S60). If it is judged by the decision that the difference is smaller than or equal to the predetermined value, Step S50 is executed and then the interrupt routine is ended. On the other hand, if the difference is greater than the predetermined value, the clogging warning lamp 78 is switched on (Step S70), whereupon the interrupt routine ends.

Thus, in the automotive air-conditioning system, the clogging detector means determines whether the filter 35 is clogged or not only when the face damper 42b for opening and closing the face air duct 22b provided with the movable louvers 30 (hereinafter generically referred to as the movable louver 30) is in the closed position. In other words, the clogging detector means detects the amount of clogging (degree of clogging) of the filter 35 only when the ventilation mode is defroster mode (only the defroster damper 42a is open) or foot mode (only the foot damper 42c is open) or foot/defroster mode (the foot and defroster dampers 42c and 42a are open). Accordingly, when the clogging of the filter is determined, the air-flow resistance of the air flow path does not vary depending on the opening of the movable louver 30 which can be freely moved by the occupant, whereby the clogging of the filter 35 can be determined with reliability by the clogging detector means.

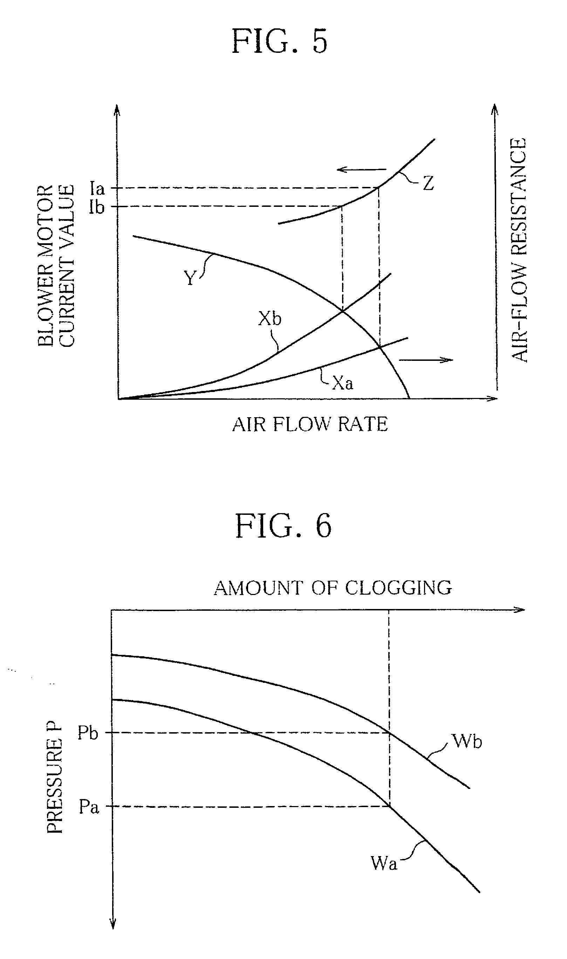

FIG. 5 is a graph showing that, while the face damper 42b is open, the current value Ix varies depending on the opening of the movable louver 30 and also that, if the movable louver 30 is closed, an erroneous judgment may possibly be made that the filter 35 is clogged.

More specifically, air-flow resistance curves Xa and Xb in FIG. 5 each indicate the relationship between the air quantity (air flow rate) and air-flow resistance of the air flow path with the face damper 42b opened. The air-flow resistance curve Xa indicates the relationship observed in the case A where the filter 35 is only slightly clogged or the movable louver 30 is opened, and the air-flow resistance curve Xb indicates the relationship observed in the case B where the filter 35 is significantly clogged or the movable louver 30 is closed.

In these cases A and B, the blower 32 operates to provide air flow rates corresponding to the intersection points between a blower characteristic curve Y and the respective air-flow resistance curves Xa and Xb, and setting these air flow rates against an operating current curve Z shows that current values Ia and Ib are supplied to the blower motor 34. Namely, the current value supplied to the blower motor 34 is dependent not only on the amount of clogging of the filter 35 but also on the opening of the movable louver 30. Thus, if the face damper 42b is open, it may possibly be judged that the filter 35 is clogged, though this is not the case.

In the aforementioned automotive air-conditioning system, the clogging detector means detects clogging of the filter 35 on the basis of the current value Ix supplied to the blower motor 34 (Step S60). However, since the clogging detector means detects clogging of the filter only while the face air duct 22b provided with the movable louver 30 is closed, the current value Ix does not increase or decrease depending on the opening of the movable louver 30, thus making it possible to detect clogging of the filter 35 with reliability.

Also, in the automotive air-conditioning system, the clogging detector means periodically repeats the measurement, and when the difference between the obtained measurement result and the initial value Io becomes greater than the predetermined value, it is judged that the filter 35 is clogged. All of the repeated determinations as to clogging (Step S60) are made while the face air duct 22b with the movable louver 30 is closed, and therefore, all current values Ix, including the initial value Io, can be measured with accuracy. As a result, clogging of the filter 35 can be detected with reliable accuracy.

The present invention is not limited to the first embodiment described above and may be modified in various ways. For example, the interrupt routine may be executed at irregular intervals in response to a request from a certain peripheral device.

In the interrupt routine of the first embodiment, the process branches depending on whether the face damper 42b is closed or not (Step S10). Step S10 may be replaced with the step of driving the servomotor 68 to forcibly close the face damper 42b so that clogging of the filter 35 may be detected every time the interrupt routine is executed.

In the first embodiment, the interrupt routine, which is a clogging detection program, is executed by the control device 50 which is adapted to execute the main program for air conditioning. Alternatively, a dedicated control device may be provided to execute the clogging detection program.

Also, the clogging sensor is not limited to the ammeter 72, and as shown in FIG. 1, a sensor 82 located between the filter 35 and the blower 32 may be used instead of the ammeter 72. The sensor 82 used in a second embodiment is, for example, a pressure sensor for detecting the pressure of the space between the filter 35 and the blower 32. Also in the second embodiment, clogging of the filter 35 can be detected with reliability on the basis of the pressure detected by the sensor 82.

FIG. 6 shows the relationship of the pressure P of the space between the filter 35 and the blower 32 with the amount of clogging of the filter, observed when the face damper 42b is open. Specifically, pressure curve Wa indicates the relationship in the case A where the movable louver 30 is open, and pressure curve Wb indicates the relationship in the case B where the movable louver 30 is closed.

As seen from FIG. 6, where the face damper 42b is open and the filter 35 is clogged to a certain degree, the pressure P is lower when the movable louver 30 is open than when the movable louver 30 is closed (Pa < Pb). Also in the second embodiment, the clogging detector means detects clogging of the filter only while the face air duct 22b provided with the movable louver 30 is closed. Accordingly, the pressure P measured by the pressure sensor 82 does not increase or decrease depending on the opening of the movable louver 30, making it possible to detect clogging of the filter 35 with reliability.

The pressure curves Wa and Wb shown in FIG. 6 were obtained with an identical current value supplied to the blower motor 34.

Further, as a third embodiment of the invention, the sensor 82 may be a flow velocity sensor for detecting the flow velocity of the air in the vicinity of the filter 35. Also in the third embodiment, the clogging detector means detects clogging of the filter only while the face air duct 22b provided with the movable louver 30 is closed, and therefore, clogging of the filter 35 can be detected with reliability.

## Claims

1. An air-conditioning system for a vehicle, comprising:
an air-conditioning unit housing (14) having an air inlet (16a, 16b) and a plurality of air outlets (20a, 20b, 20c);
a blower (32) contained, together with an evaporator (36), in the air-conditioning unit housing (14), for producing an air flow flowing from the air inlet (16a, 16b) toward the air outlets (20a, 20b, 20c) through the evaporator (36);
a filter (35) arranged between the air inlet (16a, 16b) and the blower (32), for cleaning the air flow;
a plurality of air ducts (22a, 22b, 22c) extending from the air outlets (20a, 20b, 20c), respectively, and having respective vents (24a, 24b, 24c) opening into a passenger compartment (6) of the vehicle;
a plurality of doors (42a, 42b, 42c) arranged near the air outlets (20a, 20b,20c), respectively, for opening and closing the respective air ducts (22a, 22b, 22c) ;
a movable louver (30) fitted in the vent (24b) of at lease one of the air ducts (22a, 22b, 22c) ; and
a clogging detection device (50, 72, 82) for detecting clogging of the filter (35),
**characterized in that**
the clogging detection device (50, 72, 82) detects clogging of the filter (35) only when the air duct (22b) having the vent (24b) fitted with the movable louver (30) is closed by the door (42b).

2. The air-conditioning system according to claim 1, wherein the air ducts (22a, 22b, 22c) include
a defroster duct (22a) having a vent (24a) opening toward a windshield (26) of the vehicle,
a foot duct (22c) having a foot vent (24c) opening toward feet of an occupant in the vehicle, and
a face duct (22b) having a face vent (24b) opening toward an upper half of the occupant's body and fitted with the movable louver (30), and
wherein the clogging detection device (50, 72, 82) detects clogging of the filter only when the face duct (22b) is closed and also at least one of the defroster duct (22a) and the foot duct (22c) is open.

3. The air-conditioning system according to claim 1 or 2, wherein the clogging detection device (50, 72, 82) measures at least one of a current value supplied to a motor (34) for driving the blower (32), a pressure downstream of the filter (35), and a flow velocity of the air flow in the vicinity of the filter (35), to detect clogging of the filter (35) based on a measurement result.

4. The air-conditioning system according to any one of claims 1, 2 and 3, wherein the clogging detection device (50, 72, 82) repeatedly performs the measurement and, if an amount of change of the measurement result from an initial value becomes greater than a predetermined value, judges that the filter (35) is clogged.

## Patentansprüche

1. Klimaanlagensystem für ein Fahrzeug, das umfasst:
ein Gehäuse für eine Klimaanlageneinheit (14) mit einem Lufteinlass (16a, 16b) und einer Mehrzahl an Luftauslässen (20a, 20b, 20c);
ein Gebläse (32), das zusammen mit einem Verdampfer (36) in dem Gehäuse für die Klimaanlageneinheit (14) enthalten ist, um einen Luftstrom zu erzeugen, der ausgehend von dem Lufteinlass (16a, 16b) durch den Verdampfer (36) zu den Luftauslässen (20a, 20b, 20c) fließt;
einen zwischen dem Lufteinlass (16a, 16b) und dem Gebläse (32) angeordneten Filter (35), um den Luftstrom zu reinigen;
eine Mehrzahl an Luftkanälen (22a, 22b, 22c), die sich jeweils ausgehend von den Luftauslässen (20a, 20b, 20c) erstrecken und jeweils Öffnungen (24a, 24b, 24c) aufweisen, die sich in den Fahrgastraum (6) des Fahrzeugs öffnen;
eine Mehrzahl an jeweils in der Nähe der Luftauslässe (20a, 20b, 20c) angeordnete Klappen (42a, 42b, 42c), um die jeweiligen Luftkanäle (22a, 22b, 22c) zu öffnen und zu schließen;
einen beweglichen Luftschlitz (30), der in der Öffnung (24b) wenigstens eines der Luftkanäle (22a, 22b, 22c) angeordnet ist; und
eine Verstopfungsdetektionsvorrichtung (50, 72, 82), um ein Verstopfen des Filters (35) zu detektieren,
**gekennzeichnet dadurch, dass** die Verstopfungsdetektionsvorrichtung (50, 72, 82) ein Verstopfen des Filters (35) nur detektiert, wenn der Luftkanal (22b), der die mit dem beweglichen Luftschlitz (30) ausgestattete Öffnung (24b) aufweist, von der Klappe (42b) verschlossen ist.

2. Klimaanlagensystem nach Anspruch 1, bei welchem
die Luftkanäle (22a, 22b, 22c) einen Enteisungskanal (22a) umfassen, der eine Öffnung (24a) aufweist, die sich zu einer Windschutzscheibe (26) des Fahrzeugs öffnet,
ein Fußkanal (22c) eine Fußöffnung (24c) aufweist, die sich zu den Füßen eines Insassen im Fahrzeug öffnet, und
ein Frontkanal (22b) eine Frontöffnung (24b) aufweist, die sich zu einer oberen Hälfte des Insassenkörpers öffnet und mit dem beweglichen Luftschlitz (30) ausgestattet ist, und
bei welchem die Verstopfungsdetektionsvorrichtung (50, 72, 82) ein Verstopfen des Filters nur detektiert, wenn der Frontkanal (22b) geschlossen ist und wenigstens auch einer der Kanäle der Enteisungskanal (22a) und der Fußkanal (22c) offen ist.

3. Klimaanlagensystem nach Anspruch 1 oder 2, bei welchem die Verstopfungsdetektionsvorrichtung (50, 72, 82) wenigstens einen der Werte ein einem Motor (34) zum Antreiben des Gebläses (32) zugeführten Stromwert, ein Druck stromabwärts des Filters (35) und eine Flußgeschwindigkeit des Luftstroms in der Nähe des Filters (35) misst, um ein Verstopfen des Filters (35) auf der Grundlage eines Meßergebnisses zu detektieren.

4. Klimaanlagensystem nach einem der Ansprüche 1, 2 und 3, bei welchem die Verstopfungsdetektionsvorrichtung (50, 72, 82) die Messungen wiederholt durchführt und wenn ein Änderungsbetrag des Messergebnisses ausgehend von einem Startwert größer ist als ein vorbestimmter Wert, entscheidet, dass der Filter (35) verstopft ist.

## Revendications

1. Système de conditionnement d'air pour véhicule, comprenant :
une enceinte (14) pour une unité de conditionnement d'air, possédant une admission d'air (16a, 16b) et plusieurs sorties d'air (20a, 20b, 20c);
une soufflante (32) contenue, en même temps qu'un évaporateur (36), dans l'enceinte (14) pour unité de conditionnement d'air, pour produire un flux d'air allant de l'admission d'air (16a, 16b) vers les sorties d'air (20a, 20b, 20c), en passant par l'évaporateur (36) ;
un filtre (35) disposé entre l'admission d'air (16a, 16b) et la soufflante (32), pour nettoyer le flux d'air ;
plusieurs conduits à air (22a, 22b, 22c) s'étendant à partir des sorties d'air (20a, 20b, 20c), respectivement, et présentant des orifices de ventilation (24a, 24b, 24c) s'ouvrant dans un compartiment (6) pour passagers, du véhicule ;
plusieurs portes (42a, 42b, 42c) disposées près des sorties d'air (20a, 20b, 20c), respectivement, pour ouvrir et fermer les conduits à air (22a, 22b, 22c) correspondants ;
un volet (30) mobile, ajusté dans l'orifice de ventilation (24b) d'au moins l'un des conduits à air (22a, 22b, 22c) ; et
un dispositif (50, 72, 82) de détection d'un colmatage, pour détecter un colmatage du filtre (35),
**caractérisé en ce que**
le dispositif (50, 72, 82) de détection d'un colmatage ne détecte un colmatage du filtre (35) que lorsque le conduit à air (22b) dont l'orifice de ventilation (24b) est pourvu du volet (30) mobile est fermé par la porte (42b).

2. Système de conditionnement d'air selon la revendication 1, dans lequel les conduits à air (22a, 22b, 22c) comprennent
un conduit de dégivrage (22a), présentant un orifice de ventilation (24a) s'ouvrant vers un pare-brise (26) du véhicule,
un conduit de pieds (22c) présentant un orifice de ventilation de pieds (24c) s'ouvrant vers les pieds d'un occupant du véhicule, et
un conduit de tête (22b) présentant un orifice de ventilation de tête (24b) s'ouvrant vers une moitié supérieure du corps de l'occupant du véhicule, et pourvu du volet mobile (30), et
dans lequel le dispositif (50, 72, 82) de détection d'un colmatage ne détecte un colmatage du filtre que lorsque le conduit de tête (22b) est fermé et également qu'au moins l'un parmi le conduit de dégivrage (22a) et le conduit de pieds (22c) est ouvert.

3. Système de conditionnement d'air selon la revendication 1 ou 2, dans lequel le dispositif (50, 72, 82) de détection d'un colmatage mesure au moins l'une parmi une valeur du courant fourni à un moteur (34) pour entraîner la soufflante (32), une pression en aval du filtre (35) et une vitesse d'écoulement du flux d'air au voisinage du filtre (35), pour détecter un colmatage du filtre (35) sur base d'un résultat de mesure.

4. Système de conditionnement d'air selon l'une quelconque des revendications 1, 2 et 3, dans lequel le dispositif (50, 72, 82) de détection d'un colmatage effectue la mesure de manière répétée et, si une ampleur de changement du résultat de mesure par rapport à une valeur initiale devient supérieure à une valeur prédéterminée, juge que le filtre (35) est colmaté.
